# EUROPÄISCHE PATENTSCHRIFT

(11) **EP 0 346 803 B1**
(45) Veröffentlichungstag und Bekanntmachung des Hinweises auf die Patenterteilung: **19.01.1994**
(21) Anmeldenummer: 89110609.8
(22) Anmeldetag: 12.06.1989
(51) Int. Cl.: F01N 3/02, F01N 3/04, B03C 3/00

(54) **Verfahren und Vorrichtung zur Entfernung von Russ und kondensierbaren Bestandteilen aus Dieselabgasen**
Method and device for removing soot and condensable components from diesel exhaust gases
Procédé et dispositif pour éloigner la suie et les composants condensables des gaz d'échappement de moteur diesel

(30) Priorität: 13.06.1988 DE 3820067
(43) Veröffentlichungstag der Anmeldung: 20.12.1989
(73) Patentinhaber: KRAMB MOTHERMIK GmbH & CO. KG, D-55469 Simmern (DE)
(72) Erfinder: Kramb, Jan, Dipl.-Ing. (FH), D-6540 Simmern (DE)
(74) Vertreter: Lorenzen, Knud, Dipl.-Chem. Dr.

(56) Entgegenhaltungen:
- FR-A- 2 046 678
- FR-A- 2 196 006
- FR-A- 2 543 216
- GB-A- 136 464
- US-A- 1 393 712
- US-A- 3 100 146
- US-A- 4 272 958

## Beschreibung

Die Erfindung geht aus von einem Verfahren zur kontinuierlichen Entfernung von Ruß und flüchtigen, kondensierbaren Bestandteilen aus Abgasen von Dieselmotoren und gegebenenfalls Reduzierung der NOₓ-Anteile in den Abgasen durch Abgasrückführung der von Ruß und flüchtigen, kondensierbaren Bestandteilen weitgehend gereinigten Abgase, wobei die heißen Abgase des Dieselmotors wechselweise durch zwei Wärmetauscher mit primärseitigen Kühlflächen und sekundärseitig mit einem Wärmetransportmedium beaufschlagten Flächen unter teilweiser Abscheidung von Ruß und flüchtigen, kondensierbaren Bestandteilen auf den Flächen der Wärmetauscher und Abkühlung auf wenigstens 200° C geführt werden, und der mit Rußteilchen und kondensierten Bestandteilen teilweise oder vollständig belegte Wärmetauscher jeweils durch Abschalten des Wärmetransoortmediums sich Aufheizen und Abbrennen gelassen wird, während die Reinigung der heißen Abgase in dem anderen wärmetauscher erfolgt.

Es sind bereits zahlreiche Versuche unternommen worden, Dieselabgase von Rußteilchen zu befreien. Eines dieser Verfahren bedient sich eines relativ feinporigen Filters aus Keramikmaterial, wobei die heißen Abgase des Dieselmotors durch die Poren dieses Filters gepreßt werden. Hierbei ergibt sich jedoch ein relativ rasches Verstopfen dieser feinen Poren mit Rußteilchen, so daß ein relativ hoher Rückstaudruck, der bis zu 2 bar betragen kann, aufgebaut wird. Eine weitere Schwierigkeit dieser bekannten Arbeitsweise liegt darin, daß bei der zwangsweise erforderlichen periodischen Reinigung des Keramikfilters durch Abbrennen der Rußteilchen relativ hohe Zündtemperaturen, die in dem Bereich von 600 - 800°C liegen können, erreicht werden müssen, so daß es zum Abbrennen der Rußteilchen von dem Keramikfilter notwendig ist, die für das Aufheizen auf die zum Abbrennen des Rußes erforderliche Temperatur, d.h. die Zündtemperatur, erforderliche Hitze durch einen zusätzlichen Brenner zuzuführen. Ein weiterer Nachteil liegt darin, daß durch die relativ hohe Zündtemperatur in dem zuvor genannten Bereich von 600 - 800°C nach dem Zünden der Rußteilchen bei deren Abbrennen relativ hohe Temperaturen bis in eine Größenordnung von 1200°C erreicht werden, so daß die Gefahr besteht, daß das Keramikfilter, falls es nicht aus einem besonders hochfeuerfesten Material hergestellt ist, zumindest teilweise zusammensintert oder sogar wegschmilzt. Dieselben Schwierigkeiten ergeben sich auch bei der Verwendung von feinporigen Filtern aus Metallen. Ein weiterer Nachteil liegt auch darin, daß trotz der sehr hohen Temperaturen von bis zu 1200°C ein vollständiges Abbrennen der Rußteilchen aus feinen Poren eines Filters nicht immer gewährleistet ist.

Weiterhin ist bereits die Emissionsminderung von Automobilabgasen bei Dieselmotoren bekannt. In den VDI-Berichten Nr. 559 (1985) ist auf den Seiten 94ff. die Abgasrückführung bei Dieselmotoren zur Reduzierung der NOₓ-Anteile beschrieben. Als Problem bei dieser Abgasrückführung ist auf Seite 96 die Begrenzung der Partikelemission, d.h. die Herabsetzung oder Eliminierung der Rußteilchen, in den Abgasen beschrieben, wobei auf den Seiten 96 bis 114 verschiedene mechanische und elektrostatische Filtersysteme beschrieben sind, u.a. auch mechanische Filtersysteme mit Selbstregenerierung, z.B. auf Seite 108 die Verwendung von beschichteten Filtern zur Herabsetzung der Aktivierungsenergie und damit der Zündtemperatur zum Abbrennen des Rußes. Bei solchen mechanischen Filtern, welche üblicherweise aus Keramikmaterial oder aus Stahlwolle bestehen, muß der angelagerte Ruß - wie bereits zuvor beschrieben - intermittierend oxidiert werden, wobei Schwierigkeiten wie lokale Anschmelzungen des Filtermaterials auftreten können. Weiterhin ist aus der DE-OS 24 43 897 ein Verfahren zur Steuerung der NOₓ-Emission in den Abgasen von Dieselmotoren beschrieben, wobei zur Vermeidung des Einsatzes von Filtern für die Rußteilchen das von Rußteilchen weitgehend freie Abgas von Benzinmotoren als Rückführgas verwendet wird.

Aus der EP 0 126 737 B1 ist ein Verfahren zur Reinigung von Wärmetauschern für Motorenabgase, insbesondere auch aus Dieselmotoren bekannt, bei welchem die Abgase ebenfalls an gekühlten Oberflächen von Wärmetauschern abgekühlt werden, wobei sich Rußteilchen und flüchtige, kondensierbare Bestandteile aus den Abgasen auf den gekühlten Wärmetauscherflächen abscheiden, und diese Oberflächen der Wärmetauscher nach ihrer weitgehenden oder vollständigen Sättigung mit abgeschiedenem Ruß und abgeschiedenen, kondensierten Bestandteilen durch Selbstaufheizung und Selbstentzündung wieder gereinigt werden. Eine vollständige Entfernung von Ruß und flüchtigen, kondensierbaren Bestandteilen aus den Abgasen ist hiermit jedoch nicht möglich. In dieser EP 0 126 737 ist ferner nichts darüber ausgesagt, daß die aus den Wärmetauschern austretenden Motorenabgase wieder als rückgeführtes Abgas zum Betrieb des Motors und zur Reduzierung der NOₓ-Anteile verwendet werden könnten.

Die GB-PS 923 431 zeigt ein Verfahren zur Entfernung von u.a. Ruß und flüssigen und gasförmigen Verunreinigungen aus Dieselmotoren, dieses Verfahren ist jedoch nicht kontinuierlich durchzuführen, weiterhin wird hierbei nur ein gekühltes Rohr als Wärmetauscher verwendet sowie nur eine elektrostatische Abscheidungseinrichtung, wobei weder über eine Reinigung des als Wärmetauscher dienenden Rohres noch eine Reinigung der elektrostatischen Abscheidungseinrichtung irgendetwas ausgesagt wird. Die in dieser GB-PS beschriebene Vorrichtung wäre daher für eine kontinuierliche Entfernung von Ruß und flüchtigen, kondensierbaren Bestandteilen nicht geeignet.

Aus der US-A-3 100 146 sind ein Verfahren und eine Vorrichtung zur Kondensation, Agglomeration und Filtration von Abgasen aus Verbrennungsmaschinen bekannt, wobei abgekühlte Abgase in einem mit Wechselstrom von 60 bis 5000 Hz betriebenen Agglomerator behandelt werden, um hierin enthaltene störende Bestandteile zu agglomerieren, damit diese auf filtrierbare Größe kommen. Diese agglomerierten Bestandteile werden dann in Filtern entfernt und anschließend von NOₓ-Anteilen beim Durchleiten durch eine Absorptionspatrone befreit. In dem mit Wechselstrom betriebenen Agglomerator soll aber gerade keine Abscheidung von agglomerierten Bestandteile erfolgen.

Aufgabe der vorliegenden Erfindung ist ein Verfahren zur kontinuierlichen Reinigung der Abgase aus Dieselmotoren von Ruß und kondensierbaren flüchtigen Bestandteilen, wobei die zu irgendeinem späteren Zeitpunkt erforderliche Regenerierung der Abscheideeinrichtungen problemlos durchzuführen ist und z.B. kein Anschmelzen eines Filtermaterials wie beim vorbekannten Ausbrennen von Filtern auftritt und insbesondere auch ein Aufbau eines hohen Rückstaudruckes bei der Reinigung der Abgase von Ruß und flüchtigen, kondensierbaren Bestandteilen vermieden wird, wobei der sich ergebende Rückstaudruck praktisch während des gesamten Reinigungsvorganges und des Regeneriervorganges der Abscheideflächen konstant gehalten werden kann, was einen Betrieb des Motors während längerer Betriebszeiten mit konstantem Rückstaudruck möglich macht und wobei durch die Reinigung der Abgase eine Rückführung der Abgase zur Reduzierung der NOₓ-Anteile in den Abgasen durchgeführt werden kann.

Zur Lösung dieser Aufgabe dient das erfindungsgemäße Verfahren der zuvor beschriebenen Art, wobei dieses dadurch gekennzeichnet, ist, daß die mit restlichem Ruß und kondensierten Bestandteilen beladenen, gekühlten Abgase wechselweise entweder durch zwei Einrichtungen zur elektrostatischen Abscheidung, oder durch zwei Filter mit ausreichend großen Poren oder Durchtrittsflächen, so daß kondensierte Bestandteile in den Poren oder Durchtrittsflächen keinen zusammenhängenden, die Poren der Durchtrittsflächen verstopfenden Flüssigkeitsfilm bilden, geleitet werden, wobei belegte Ablagerungsflächen periodisch entweder ebenfalls durch Aufheizen mit heißen Abgasen des Dieselmotors und Selbstzündung abbrennen gelassen werden, oder durch neue Ablagerungsflächen ersetzt werden.

Vorteilhafte Ausführungsformen des Verfahrens sind in den Ansprüchen 2 bis 4 näher beschrieben.

Die Erfindung betrifft weiterhin eine Vorrichtung zur Durchführung eines solchen Verfahrens, wobei diese dadurch gekennzeichnet ist, daß sie umfaßt: zwei Kreuzstromwärmetauscher, zwei Umlenkventile, Leitungen für das Abgas, und dadurch gekennzeichnet ist, daß sie weiterhin umfaßt: entweder zwei Einrichtungen zur elektrostatischen Abscheidung, deren Aufladungselektroden dünne Metalldrähte und deren Sammelelektroden die Rohre der Kreuzstromwärmetauscher sind, oder zwei Filter mit ausreichend großen Poren oder Durchtrittsflächen, so daß kondensierte Bestandteile in den Poren oder Durchtrittsflächen keinen zusammenhängenden, die Poren oder Durchtrittsflächen verstopfenden Flüssigkeitsfilm bilden.

Gemäß einer bevorzugten Ausführungsform ist bei einer solchen Vorrichtung noch ein Keramikschaumfilter zwischen den Wärmetauschern und der Einrichtung zur elektrostatischen Abscheidung angebracht.

Es wurde gefunden, daß es durch Kühlung der heißen Abgase des Dieselmotors an den gekühlten primärseitigen Oberflächen eines sekundärseitig gekühlten Wärmetauschers möglich ist, den größten Teil oder weitgehend die Gesamtmenge der in den Abgasen enthaltenen Rußteilchen und der hierin enthaltenen flüchtigen, kondensierbaren Bestandteile in einer nachgeschalteten Abscheideeinrichtung auf Ablagerungsflächen abzuscheiden, wobei der Abscheidungsgrad ausreichend ist, damit ein solches gereingites Abgas ohne schädliche Einflüsse, z. B. durch unregelmäßige Zündung als Folge von rückgeführten, zündfähigen, flüchtigen Bestandteilen der Abgase,oder durch mechanische Zerstörung, z. B. durch Schmirgelwirkung der in den rückgeführten Abgase enthaltenen festen Rußteilchen auf die Kolbenringe und Zylinderwände des Dieselmotors, rückgeführt werden kann, wodurch eine Reduzierung von NOₓ-Anteilen im Motorabgas möglich wird.

Die auf den gekühlten Flächen des Wärmetauschers oder den nachgeschalteten Ablagerungsflächen abgeschiedenen Rußteilchen oder kondensierten Bestandteile können nach Abschaltung der Kühlung des Wärmetauschers durch Selbaufheizen durch die nunmehr nicht mehr gekühlten Motorabgase bis zur Selbstzündungstemperatur aufgeheizt werden und brennen dann von selbst ab.

Unter kondensierbaren Bestandteilen der Abgase sind alle die flüchtigen Bestandteile, d. h. im wesentlichen Kohlenwasserstoffe , zu verstehen, die bei Temperaturen, wie sie an den Wärmetauscheroberflächen oder den Ablagerungsflächen herrschen, kondensierbar sind.

Auf den nachgeschalteten Ablagerungsflächen kondensierte Bestandteile und dort abgeschiedene Rußteilchen können aber alternativ auch dadurch entfernt werden, daß diese Ablagerungsflächen, d. h. entweder die Sammelelektroden der Einrichtung zur elektrostatischen Abscheidung oder die Filter,ausgewechselt und durch frische Sammelelektroden oder Filter ersetzt werden. Eine Reininung belegter Sammelelektroden oder Filter kann dann gegebenenfalls gesondert erfolgen.

Damit eine nennenswerte und ausreichende Abscheidung aus den Abgasen nach Durchtritt durch den Wärmetauscher erfolgt, müssen die Abgase beim Durchtritt durch den Wärmetauscher auf Temperaturen von höchstens 200°C abgekühlt werden, vorzugsweise auf bis auf eine Abgastemperatur von höchstens 140°C und besonders bevorzugt unter 100° C. Dabei werden die kondensierbaren Bestandteile auf den gekühlten oder kalten Flächen kondensiert und bilden eine feuchte, klebrige Schicht, auf der die in den Abgasen enthaltenen Rußteilchen abgefangen und festgeklebt werden.

Je tiefer die Temperatur liegt, mit welcher die Abgase aus dem Wärmetauscher nach der Durchführung der ersten Stufe austreten bzw. je niedriger die Temperatur der Oberflächen der Wärmetauscher liegt, desto mehr flüchtige Bestandteile werden kondensiert. Dies weist jedoch auch den Vorteil auf, daß die Zündtemperatur zur Selbstentzündung der kondensierten Bestandteile und des Rußes auf den Wärmetauscherflächen wesentlich herabgesetzt wird, z B. konnten in Versuchen Zündtemperaturen der Selbstentzündung von etwa 280°C festgestellt werden.

Das erfindungsgemäße Verfahren kann unter Zuhilfenahme von Wärmetauschern durchgeführt werden, welche feststehende Wärmetauschkanäle oder Wärmetauschflächen für jeweils ein primäres und sekundäres Wärmetransportmedium aufweisen, und bei denen die Medien je eine Seite der Kanalwand oder der Oberfläche berühren, wie sie in der zuvorgenannten EP 0 126 737 beschrieben sind.

Nach vollständiger oder teilweiser Sättigung der Wärmetauscherflächen mit abgeschiedenem Ruß und kondensierten Bestandteilen wird dann das auf der Sekundärseite des Wärmetauschers durchströmende Wärmetransportmedium, das sowohl ein Gas als auch eine Flüssigkeit sein kann, d.h. insbesondere Luft oder Wasser, gegebenenfalls mit einem Frostschutzmittel versetzt, abgeschaltet oder unterbrochen, so daß der Wärmetauscher durch das heiße Abgas fortschreitend auf eine höhere Temperatur gebracht wird. Falls das sekundärseitig eingesetzte Wärmetransportmedium eine Flüssigkeit, z.B. Wasser, ist, muß die Möglichkeit geschaffen werden, daß dieses Wärmetransportmedium entweder vorher aus der Sekundärseite des Wärmetauschers abgelassen wird oder hieraus entweichen kann, damit der Wärmetauscher auf eine ausreichend hohe Temperatur durch das heiße Abgas aufgeheizt werden kann und das flüssige Wärmetransportmedium nicht verdampft oder sich zersetzt. Bei Verwendung eines gasförmigen sekundären Wärmetransportmediums reicht es selbstverständlich aus, daß der Durchfluß des Wärmetransportmediums durch die Sekundärseite des Wärmetauschers unterbrochen wird. Nachdem der Wärmetauscher sich auf eine ausreichend hohe Temperatur erhitzt hat, z.B. 300°C, erfolgt eine Selbstzündung auf der Primärseite des Wärmetauschers, d.h. auf den primärseitigen Wärmetauscherflächen abgeschiedener Ruß und hierauf kondensierter Bestandteile verbrennen, da in den heißen Abgasen von Dieselmotoren immer eine Sauerstoffrestmenge enthalten ist. Nach ausreichender Selbstreinigung, d.h. möglichst vollständigem Abbrennen des Rußes und der kondensierten Bestandteile von den primärseitigen Wärmetauscherflächen, kann die Zirkulation des Wärmetransportmediums auf der Sekundärseite des Wärmetauschers wieder auf genommen werden, bzw. im Fall eines flüssigen Wärmetransportmediums, für welches die sekundärseitigen Wärmetauscherflächen noch zu heiß sind, nach geeigneter Abkühlung dieser sekundärseitigen Wärmetauscherflächen des Wärmetauschers, z.B. durch Durchleiten von Luft oder durch Selbstabkühlung nach Unterbrechen des Durchströmens heißer Abgase, kann der Wärmetauscher insgesamt wieder gekühlt werden, so daß er für einen weiteren Zyklus in der ersten Stufe des erfindungsgemäßen Verfahrens zur Verfügung steht. Dieser Abscheide- und Selbstreinigungszyklus eines solchen Wärmetauschers kann alternierend wiederholt werden.

Bei Verwendung nur eines Wärmetauschers der zuvor beschriebenen Art mit primärem und sekundärem Wärmetransportmedium wäre eine Abgasrückführung zur Verminderung der NOₓ-Anteile natürlich nur während der ersten Stufe, nämlich der Reinigung der Abgase möglich, während bei der Selbstreinigung des Wärmetauschers eine Rückführung von Abgasen nicht möglich ist.

Bei dem erfindungsgemäßen Verfahren werden zwei Wärmetauscher eingesetzt, so daß ein kontinuierliches Arbeiten möglich ist, und zwar sowohl zur Abscheidung von Rußteilchen und kondensierbaren Bestandteilen als auch bei der Abgasrückführung.

Bei dem erfindungsgemäßen Verfahren werden die aus dem Wärmeaustauscher austretenden, abgekühlten Abgase einer weiteren Behandlung zur weitgehend vollständigen Abscheidung von Ruß und flüchtigen, kondensierten Bestandteilen unterzogen. Hierzu werden die Abgase wechselweise durch eines von zwei Filtern geleitet oder durch eine der Einrichtungen zur elektrostatischen Abscheidung geführt, wobei es auch möglich ist, beide Reinigungsmethoden durchzuführen, d.h. die abgekühlten Abgase zunächst durch ein Filter und dann wechselweise durch eine eine der beiden Einrichtungen zur elektrostatischen Abscheidung. Hierdurch wird eine weitgehende oder vollständige Befreiung der Abgase von Rußteilchen und kondensierbaren Bestandteilen erreicht.

Als Filter wird vorteilhafterweise ein Filter mit groben Poren, bevorzugt ein sogenannter Keramikschaum verwendet. Diese können im Temperaturbereich bis 1000° C eingesetzt werden, z. B. ein Keramikschaum der Fa. Illbruck. Solche Filter sind auch in VDI-Berichten 559, Seite 103, Bild 4 beschrieben. Sie besitzen Porenzahlen vorteilhafterweise von 4 bis 40 pro cm bzw. Porenweiten von 0,1 bis 1 mm. Durch einsatz eines solchen Filters erfährt dieser während des Betriebes in einem Zyklus normalerweise keinerlei Verstopfung, so daß keine Veränderung des Rückstaudruckes im Motor auftritt.

Eine Vorrichtung zur Durchführung des erfindungsgemäßen Verfahrens umfaßt vorteilhafterweise als Wärmetauscher Kreuzstromwärmetauscher, wobei die Kühlflächen durch senkrecht zur Strömungsrichtung der heißen Motorabgase angeordnete Rohrbündel, vorzugsweise dünnwandige Stahlrohre oder Kupferrohre gebildet werden. Hierbei ist es vorteilhaft, wenn die Wärmekapazität eines solchen Wärmetauschers möglichst gering ist, damit ein rasches Aufheizen und damit auch eine rasche Selbstentzündung der abgelagerten Stoffe auf den Wärmetauscherflächen erfolgt, sobald die Kühlung abgeschaltet worden ist. Bei Verwendung eines Keramikschaums als Material fur die Filter ist die Wärmekapazität eines solchen Keramikschaums üblicherweise so gering, so daß eine rasche Aufheizung durch heiße Motorabgase und eine Selbstzündung erfolgt.

Ebenfalls sollten die Einrichtungen zur elektrostatischen Abscheidung eine relativ geringe Wärmekapazität besitzen, damit sie rasch aufgeheizt werden können. Im Fall der Verwendung eines Kreuzstromwärmetauschers als Sammelelektrode ist dies in vorteilhafter Weise gegeben.

Durch die Verwendung von zwei Wärmetauschern mit primären und sekundären Wärmetauscherflächen ist der Vorteil gegeben, daß nur diese beiden Wärmetauscher mit einem zwischengeschalteten Filter und den beiden Einrichtungen zur elektrostatischen Abscheidung erforderlich sind, wobei die primärseitigen Wärmetauscherflächen, bevorzugt die Rohre, als Sammelelektrode für die elektrostatische Abscheidung verwendet werden.

Für die Wärmetauscher kann im Fall der Verwendung eines flüssigen sekundärseitigen Kühlmediums, die übliche Kühlflüssigkeit des Motors benutzt werden, wobei es dann für den Aufheiz- und Abbrennzyklus allerdings erforderlich ist, einen solchen Wärmetauscher zu entleeren. Eine solche Entleerung kann einmal durch Betätigung geeignet angeordneter Ventile und Ablaufenlassen des Wärmetransportmediums, z.B. der Motorkühlflüssigkeit, in einen geeigneten Vorratsbehälter erfolgen, es ist jedoch auch möglich, nur den Kreislauf dieser Kühlflüssigkeit auf der Sekundärseite des Wärmetauschers im oberen Teil abzuschließen, wobei sich dann beim allmählichen Aufheizen des Wärmetauschers durch die heißen Motorabgase als Folge der fehlenden Zirkulation der Kühlflüssigkeit und Überschreiten des Siedepunktes der Kühlflüssigkeit ein Dampfpolster bildet, welches die Flüssigkeit nach unten aus dem Wärmetauscher herausdrückt. Falls die Flüssigkeit vollständig aus der Sekundärseite eines solchen Wärmetauschers in einen geeignet dimensionierten Vorratsbehälter oder Zwischenlagerbehälter austreten kann, kann die obere Zuleitung eines solchen Wärmeaustauschers während des Aufheiz- und Abbrennzyklus verschlossen bleiben. Durch Selbstabkühlung oder durch Zwangsabkühlung, z.B. mittels Durchleiten von Luft, kann der Wärmetauscher sekundärseitig dann abgekühlt werden, so daß er nach der Abkühlung für die Reinigungsstufe durch Kondensation von flüchtigen Bestandteilen und Abscheidung von Ruß wieder zur Verfügung steht, sobald wieder Kühlflüssigkeit eingefüllt wurde.

Die elektrostatische Abscheidung kann als sogenannte 'stille Entladung',bevorzugt jedoch als sogenannte 'Sprühentladung' oder 'Koronaentladung'durchgeführt werden. Eine solche Sprühentladung kann bei den abgekühlten Abgasen bei Spannungen von 5 bis 30 kV erreicht werden, falls eine geeignete Sprühelektrode oder Aufladungselektrode, z. B. in Form eines dünnen Drahtes von z. B. 0,2 mm Durchmesser, in einem geeigneten Sammelrohr, das runden oder auch rechteckigen Querschnitt haben kann und als Sammelelektrode dient, eingesetzt wird. Bevorzugt ist hierbei die Verwendung von einzelnen Wärmetauscherrohren eines einsetzbaren Wärmetauschers, wobei von den beiden eingesetzten Wärmetauschern einer zur Regenerierung sich aufheizen und abbrennen gelassen wird und der andere als Sammelelektrode einer elektrostatischen Abscheidung eingesetzt wird und als Sammelelektrode dient, in dessen Mitte in Längsrichtung der Wärmetauscherrohre die Sprühelektrodendrähte angeordnet sind. Geeignete Längen der als Sammelelktrode dienenden Rohre liegen zwischen 0,3 und 1,5 m. Bevorzugt sollte die Strömungsgeschwindigkeit der Abgase unter 2 m/sec liegen und die Kontaktzeit wenigstens 0,5 sec in der Einrichtung zur elektrostatischen Abscheidung betragen.

Wie bereits zuvor beschrieben, kann ein Teil der gereinigten Abgase zur Reduzierung der NOₓ-Anteile in den Abgasen von Dieselmotoren rückgeführt werden, hierzu werden üblicherweise 5 bis 50 Vol.-% der in den Dieselmotor eingeführten Verbrennungsluft durch Rückführabgas ersetzt.

Gemäß der alternativen Ausführungsform erfolgt bei den verwendeten Ablagerungsflächen für restliche Rußteilchen und kondensierte Bestandteile nach deren Sättigung keine Selbstaufheizung und kein Abbrennenlassen der abgelagerten Bestandteile, sondern diese Ablagerungsflächen, d. h. Filter oder die als Ablagerungsflächen dienenden Sammelelektroden einer eletrostatischen Abscheidungseinrichtung werden durch frische Filter bzw. Sammelelektroden ersetzt. Dies ist insbesondere dann möglich, wenn gemäß einer weiteren bevorzugten Ausführungsform bei dem erfindungsgemäßen Verfahren an den verwendeten Einrichtungen Behälter und Abflüsse für an den Ablagerungsflächen abgeschiedene, kondensierte und von diesen Ablagerungsflächen ablaufende Bestandteile vorhanden sind, so daß z. B. ein Filter oder eine Sammelelektrode einer elektrostatischen Abscheideeinrichtung eine wesentlich längere Standzeit bis zur Sättigung aufweist. Ein Austausch eines Filters, insbesondere auch eines Keramikschaumfilters ist ähnlich wie der Austausch eines Luftfilters eines Motors leicht durchführbar. Die Sammelelektrode einer elektrostatischen Abscheideeinrichtung kann für eine höhere Aufnahmefähigkeit für kondensierte,hierauf abgschiedene, flüssige oder fließfähige Bestandteile ebenfalls mitvergrößerter Oberfläche ausgebildet sein, z. B. als aus einem Metallgewebe oder -gewirke hergestelltes Bauteil bzw. Körper.

Falls als Sammelelektrode einer elektrostatischen Abscheideeinrichtung ein zweiter Wärmetauscher verwendet wird, ist selbstverständlich die Ausführungsform mit Reinigung beladener Flächen durch Selbstaufheizung und Abbrennenlassen die übliche Reinigungsmethode.

Die Erfindung betrifft weiterhin eine Vorrichtung zur Durchführung des erfindungsgemäßen Verfahrens.

Eine solche Vorrichtung wie auch das Verfahren selbst wird mit Bezug auf die Zeichnung im folgenden näher erläutert; in der Zeichnung stellen dar:
- Fig. 1 :: eine Ausführungsform mit zwei Wärmetauschern und zwei Einrichtungen zur elektrostatischen Abscheidung;
- Fig. 2 :: eine Ausführungsform mit zwei Wärmetauschern und Keramikschaumfilter, wobei zwei Einrichtungen zur elektrostatischen Abscheidung vorgesehen sind, deren Sammelelektroden jeweils ein Wärmetauscher bildet;

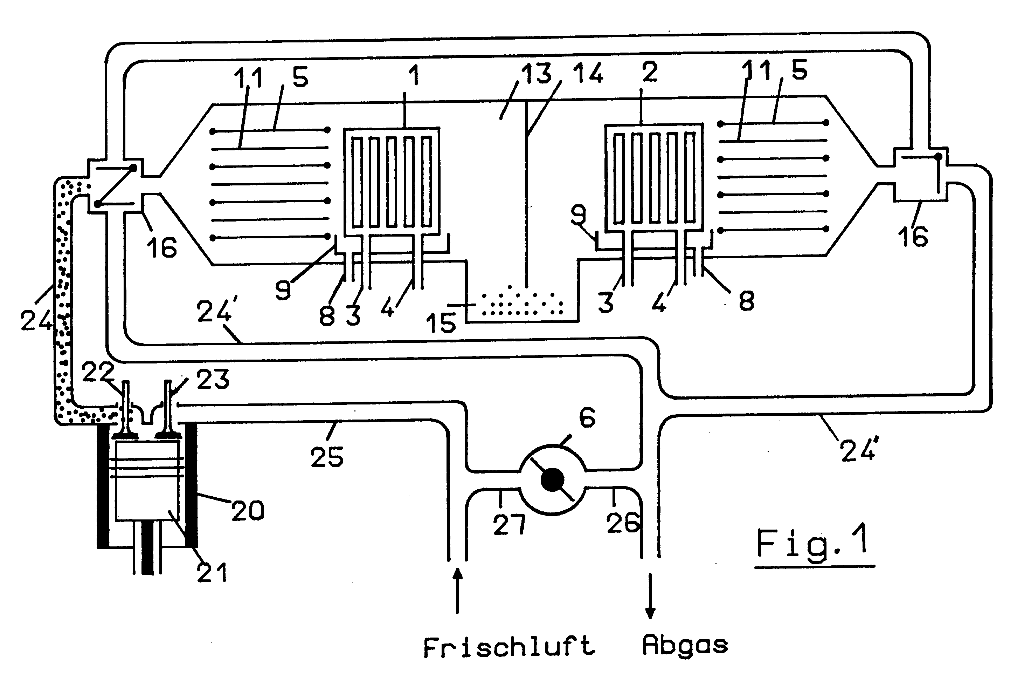

Die Fig. 1 zeigt eine Ausführungsform, bei welcher die Vorrichtung zwei Wärmetauscher 1, 2 in Form von Kreuzstrom-Rohrbündelwärmetauschern, welche in Serie hintereinander geschaltet sind, sowie zwei Einrichtungen zur elektrostatischen Abscheidung mit den Aufladungselektroden 5 und den Ablagerungsflächen bzw. Sammelelektroden 11 und einen zwischengeschalteten Grobabscheider 15 umfaßt. An den Wärmetauschern 1, 2 sind jeweils Sammelbehälter 9 mit Abflüssen 8 vorgesehen, über die an den Wärmetauschern kondensierte, flüssige Bestandteile aufgefangen und abgeführt werden können. Ferner vorgesehen ist eine Abgasrückführung zur Reduzierung der NOₓ-Anteile, 20 bezeichnet die Zylinderwand eines Dieselmotors, 21 den hierin beweglichen Kolben und 22 und 23 das Auslaßventil bzw. Einlaßventil. 24 ist die Auslaßleitung des Motors, durch welche die verunreinigten, schwarz gepunktet dargestellten,ungereinigten Abgase abgeführt werden, und 25 die Frischluftleitung des Motors. Einspritzpumpe, Einspritzmechanismus für den Dieselkraftstoff und andere Teile des Motors sind nicht dargestellt.
Die Abgase der Leitung 24 werden zunächst durch die elektrostatishe Abscheideeinrichtung 5, 11 und dann den Wärmetauscher 1, einen Kreuzstromwärmetauscher geführt, der über die Zuleitung 3 und die Ableitung 4 mit der zur Motorkühlung benutzten Kühlflüssigkeit gekühlt werden kann. Die zur Durchführung des erfindungsgemäßen Verfahrens zum Absperren bzw. Unterbrechen des Kühlflüssigkeitskreislaufes bzw. des Kreislaufes des Wärmetransportmediums und gegebenenfalls zum Entleeren der Wärmetauscher erforderlichen Ventile, Belüftungen und Auffangbehälter für abgelassenes Wärmetransportmedium sind nicht dargestellt. Mit 24′ ist die Leitung für gereinigtes Abgas nach dem Keramikfilter 7 bezeichnet.

Ferner umfaßt die Vorrichtung noch die Umlenkventile 16, über welche die wahlweise Führung der heißen, verunreinigten Motorabgase entweder zuerst zu dem Wärmetauscher 1 oder zu dem Wärmetauscher 2 möglich ist.
Beim Betrieb dieser Vorrichtung wird z. B. das heiße Abgas zunächst bei nicht in Betrieb befindlicher Einrichtung zur elektrostatischen Abscheidung auf der linken Seite der Fig. 1 zu dem Wärmetauscher 1 geführt, hierin abgekühlt, wobei sich ein Teil der Rußteilchen und kondensierbaren Bestandteile auf den Wärmetauscherflächen abscheiden. Anschließend werden die gekühlten Abgase zu dem Wärmetauscher 2 geführt, der sowohl gekühlt als auch nicht gekühlt sein kann,und werden dann durch die in Betrieb befindliche Einrichtung zur elektrostatischen Abscheidung mit den Aufladungselektroden 5 und den Sammelelektroden 11 geführt, so daß sich auf diesen Sammelelektroden 11 Rußteilchen und kondensierte Bestandteile abscheiden. Die gereinigten Abgase treten dann in die Leitung 24′ für gereinigtes Abgas und werden teilweise in die Atmosphäre abgegeben, teilweise als Rückführabgas über die Abzeigleitung 26 benutzt.
Nach Sättigung des Wärmetauschers 1 mit Verunreinigungen wird die Zufuhr von Wärmetransportmedium über die Leitung 3 abgeschaltet und der Wärmetauscher 1 entweder entleert oder das hierin befindliche Wärmetransportmedium bei Erreichen seiner Siedetemperatur aus dem Wärmetauscher herrausgedrückt, wobei die Leitung 4 selbstverständlich geöffnet sein muß. Nach Erreichen der Zündtemperatur an den Wärmetauscherflächen brennen hierauf abgelagerte Verunreinigungen ab. Falls der Wärmetauscher 2 zuvor nicht gekühlt wurde, muß seine Kühlung selbstverständlich vorher eingeschaltet worden sein. Gröbere Rußteilchen scheiden sich im dem Grobabscheider 15 ab und Verunreinigungen in des Abbrenngasen, die mit weiteren Motorabgasen vermischt sind, können sich auf den Flächen des Wärmetauschers 2 und bei eingeschalteter Einrichtung zur elektrostatischen Abscheidung ablagern. Nachdem der wärmetauscher 1 gereinigt wurde und wieder abgekühlt ist, kann, wenn der Wärmetauscher 2 mit Rußteilchen und kondensierbaren Bestandteilen gesättigt ist, die Richtung der heißen Motorabgase mittels der Umlenkventile 16 umgekehrt werden, so daß die heißen Motorabgase zunächst zu dem Wärmetauscher 2 bei abgeschaltetet Einrichtung zur elektrostatischen Abscheidung auf der rechten Seite der Fig. 1 geführt werden. Auf diese Weise ist ein kontinuierliches Reinigen der heißen Motorabgase und eine jederzeit mögliche Reinigung der Wärmetauscherflächen bzw. Sammelelektroden möglich, damit auch eine kontinuierliche Rückführung von gereinigten Motorabgasen zur NOₓ-Reduzierung.

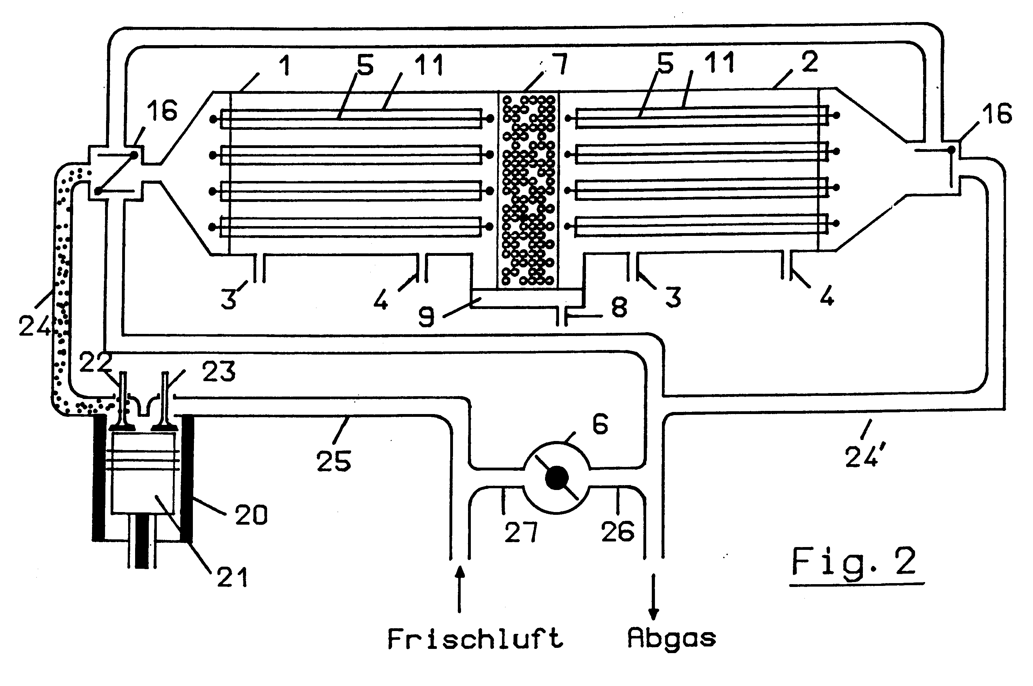

Die Fig. 2 zeigt eine weitere Ausführungsform, bei der wiederum zwei Wärmetauscher 1, 2 vorgesehen sind. In diesen Wärmetauschern 1, 2 befinden sich jeweils Aufladungselektroden 5 einer elktrostatischen Abscheideeinrichtung, wobei die einzelnen Rohre 11 der Wärmetauscher 1, 2 als Sammelelektroden bzw. Ablagerungsflächen dienen. Zwischen den beiden Wärmetauschern 1, 2 ist ein Keramikschaumfilter 7 zwischengeschaltet.
Im Betrieb werden die heißen Motorabgase z. B. zunächst über die Umlenkventile 16 so geführt, daß sie zuerst zum Wärmetauscher 1 gelangen. Hierbei ist die Stromzufuhr zu den Aufladungselektroden 5 in diesem Wärmetauscher 1 unterbrochen. Die heißen Motorabgase werden in dem Wärmetauscher 1 abgekühlt, treten dann durch das Keramikschaumfilter 7, das wiederum mit einem Auffangbehälter 9 und einem Abfluß 8 für kondensierte, flüssige Bestandteile versehen ist, und gelangen zum Wärmetauscher 2, dessen Aufladungselektroden 5 unter Strom stehen. Auf diese Weise wirkt dieser Wärmetauscher 2 bzw. seine Rohre 11 als Ablagerungsfläche für durch elektrostatische Aufladung abscheidbare Rußteilchen bzw. Tröpfchen von kondensierten Bestandteilen.

Die zuvor beschriebene Einrichtung zur Abgasrückführung umfaßt die Leitung 26, zur Abzweigung eines durch den Abgasrückführungsmengenregler 6 geregelten gereinigten Abgasstromes und dessen Zuführung über die Leitung 27 zu der Frischluftleitung 25.

Bei Versuchen mit einer Vorrichtung, die der in Fig. 2 dargestellten Vorrichtung weitgehend entsprach, wurden die Abgase eines Dieselmotors mit Direkteinspritzung und einer Wellenleistung von 125 kW gereinigt, wobei eine Teilströmung der Abgase durch ein Stahlrohr von 1,2 m Länge und 103 mm Innendurchmesser, in welchem ein Draht von 0,2 mm Durchmesser als Aufladungselektrode in Längsrichtung angeordnet war, geleitet wurde. Die Temperatur der Abgase beim Eintritt in das Stahlrohr betrug 80° C, die Strömungsgeschwindigkeit etwa 0,9 m/sec. Beim Anlegen einer Spannung von 20 kV und bei einer Leistungsaufnahme von 40 W ergab sich bei einer Gasmenge von 1 Norm-m³ und Messung der im behandelten Abgas enthaltenen Restmengen an Ruß und kondensierbaren Bestandteilen mittels Durchsaugen durch ein Filterpapierblatt von 5 cm Durchmesser, daß das Filterpapier vollkommen weiß blieb und daß kondensierbare Bestandteile nicht auf dem Filterpapier durch Bestimmung der Gewichtsdifferenz festgestellt werden konnten. Bei Messung desselben Abgases, jedoch vor der Behandlung in einem Keramikfilter und der zuvor beschriebenen Einrichtung zur elktrostatischen Reinigung,das nur in einem Wärmetauscher abgekühlt worden war, ergab sich ein vollkommen geschwärztes Filter, das nach Durchsaugen von 1 Norm-m³ Abgas eine Gewichtszunahme von etwa 6o mg aufwies.

## Patentansprüche

1. Verfahren zur kontinuierlichen Entfernung von Ruß und flüchtigen, kondensierbaren Bestandteilen aus Abgasen von Dieselmotoren und gegebenenfalls Reduzierung der NOₓ-Anteile in den Abgasen durch Abgasrückführung der von Ruß und flüchtigen, kondensierbaren Bestandteilen weitgehend gereinigten Abgase, wobei
a) die heißen Abgase des Dieselmotors wechselweise durch zwei Wärmetauscher mit primärseitigen Kühlflächen und sekundärseitig mit einem Wärmetransportmedium beaufschlagten Flächen unter teilweiser Abscheidung von Ruß und flüchtigen, kondensierbaren Bestandteilen auf den Flächen der Wärmetauscher und Abkühlung auf wenigstens 200° C geführt werden, und der mit Rußteilchen und kondensierten Bestandteilen teilweise oder vollständig belegte Wärmetauscher jeweils durch Abschalten des Wärmetransportmediums sich Aufheizen und Abbrennen gelassen wird, während die Reinigung der heißen Abgase in dem anderen Wärmetauscher erfolgt,
dadurch gekennzeichnet, daß
b) die mit restlichem Ruß und kondensierten Bestandteilen beladenen, gekühlten Abgase wechselweise entweder durch zwei Einrichtungen zur elektrostatischen Abscheidung, oder durch zwei Filter mit ausreichend großen Poren oder Durchtrittsflächen, so daß kondensierte Bestandteile in den Poren oder Durchtrittsflächen keinen zusammenhängenden, die Poren der Durchtrittsflächen verstopfenden Flüssigkeitsfilm bilden, geleitet werden, wobei belegte Ablagerungsflächen periodisch entweder ebenfalls durch Aufheizen mit heißen Abgasen des Dieselmotors und Selbstzündung abbrennen gelassen werden, oder durch neue Ablagerungsflächen ersetzt werden.

2. Verfahren nach Anspruch 1, dadurch gekennzeichnet, daß als Sammelelektrode der Einrichtungen zur elektrostatischen Abscheidung in Stufe b) die Kühlflächen eines Wärmetauschers verwendet werden.

3. Verfahren nach Anspruch 1 oder 2, dadurch gekennzeichnet, daß die in einem Wärmetauscher gekühlten Abgase bei der Durchführung der Stufe b) zuerst durch ein Filter mit ausreichend großen Poren oder Durchtrittsflächen und anschließend durch die Einrichtungen zur elektrostatischen Abscheidung geleitet werden.

4. Verfahren nach Anspruch 1 oder 3, dadurch gekennzeichnet, daß ein Keramikfilter oder Keramikschaum mit einer Porenzahl von 4 bis 40 pro cm verwendet wird.

5. Vorrichtung zur Durchführung des Verfahrens nach einem der vorhergehenden Ansprüche, umfassend zwei Kreuzstromwärmetauscher (1, 2), zwei Umlenkventile (16), Leitungen (24, 24') für das Abgas, dadurch gekennzeichnet, daß sie weiterhin umfaßt: entweder zwei Einrichtungen zur elektrostatischen Abscheidung, deren Aufladungselektroden (5) dünne Metalldrähte und deren Sammelelektroden (11) die Rohre der Kreuzstromwärmetauscher (1, 2) sind, oder zwei Filter mit ausreichend großen Poren oder Durchtrittsflächen, so daß kondensierte Bestandteile in den Poren oder Durchtrittsflächen keinen zusammenhängenden, die Poren oder Durchtrittsflächen verstopfenden Flüssigkeitsfilm bilden.

6. Vorrichtung nach Anspruch 5 mit zwei Einrichtungen zur elektrostatischen Abscheidung (5, 11), dadurch gekennzeichnet, daß zwischen diesen beiden Einrichtungen ein Keramikschaumfilter (7) vorhanden ist.

## Claims

1. Method of continuously removing soot and volatile, condensable components from exhaust gases of diesel engines and optionally reducing the NOₓ components in the exhaust gases by recycling the exhaust gases substantially cleaned of soot and volatile, condensable components, whereby
a) the hot exhaust gases of the diesel engine are passed alternately through two heat exchangers with primary cooling surfaces and secondary surfaces acted on by a heat transport medium whilst partially depositing soot and volatile, condensable components on the surfaces of the heat exchanger and cooling to at least 200°C and the heat exchanger coated partially or completely with soot particles and condensable components may be heated up and burnt off by switching off the heat transport medium whilst the cleaning of the hot exhaust gases is effected in the other heat exchanger,
characterised in that
b) the cooled exhaust gases loaded with residual soot and condensed components are passed alternately either through two devices for electrostatic precipitation or through two filters with sufficiently large pores or apertured surfaces that condensed components in the pores or apertured surfaces do not form a continuous liquid film blocking the pores of the apertured surfaces, whereby coated deposition surfaces may periodically either also be burnt off by heating up with hot exhaust gases from the diesel engine and self-ignition or are replaced by new deposition surfaces.

2. Method as claimed in Claim 1, characterised in that the cooling surfaces of a heat exchanger are used as the collector electrode of the devices for electrostatic precipitation in step b).

3. Method as claimed in Claim 1 or 2, characterised in that the exhaust gases cooled in a heat exchanger whilst performing step b) are passed firstly through a filter with sufficiently large pores or apertured surfaces and subsequently through the devices for electrostatic precipitation.

4. Method as claimed in Claim 1 or 3, characterised in that a ceramic filter or ceramic foam with a pore number of 4 to 40 per cm is used.

5. Apparatus for carrying out the method as claimed in one of the preceding claims including two cross-current heat exchangers (1, 2), two diverter valves (16), conduits (24, 24') for the exhaust gas, characterised in that it further includes: either two devices for electrostatic precipitation whose charging electrodes (5) are thin metal wires and whose collector electrodes (11) are the pipes of the cross-current heat exchangers (1, 2) or two filters with sufficiently large pores or apertured surfaces that condensed components in the pores or apertured surfaces do not form a continuous liquid film blocking the pores or apertured surfaces.

6. Apparatus as claimed in Claim 5 with two devices for electrostatic precipitation (5, 11), characterised in that a ceramic foam filter (7) is situated between these two devices.

## Revendications

1. Procédé pour l'élimination en continu de la suie et des composants volatiles condensables des gaz de moteurs Diesel et le cas échéant pour réduire la proportion de NOₓ dans les gaz d'échappement par recyclage des gaz d'échappement chargés en suie et en composants volatiles condensables, dans lequel
a) on fit passer alternativement les gaz d'échappement chauds du moteur Diesel dans deux échangeurs de chaleur avec des surfaces de refroidissement côté primaire et balayés par un fluide caloporteur côté secondaire, la suie et les composants volatiles condensables des gaz se déposant partiellement sur les surfaces des échangeurs de chaleur et les gaz d'échappement étant refroidis à 200 °C au moins et on chauffe et on nettoie par combustion l'échangeur de chaleur partiellement ou totalement colmaté par de la suie et des composants volatiles condensables tandis que l'épuration des gaz chauds a lieu dans l'autre échangeur de chaleur,
caractérisé par le fait que
b) l'on fait passer les gaz d'échappement refroidis chargés de restes de suie et de composants condensables alternativement soit dans deux dispositifs de séparation électrostatique, soit dans deux filtres à pores ou surfaces de passage suffisamment grands de telle sorte que les composants condensés dans les pores ou les surfaces de passage ne forment pas de film liquide continu obstruant les pores ou les surfaces de passage, les surfaces de dépôt recouvertes étant périodiquement soit nettoyées par combustion par chauffage par les gaz d'échappement du moteur Diesel et inflammation spontanée, soit remplacées par de nouvelles surfaces de dépôt.

2. Procédé selon la revendication 1, caractérisé par le fait que, lors de l'étape b), l'on utilise comme électrode collectrice dans les dispositifs de séparation électrostatique les surfaces de refroidissement d'un échangeur de chaleur.

3. Procédé selon la revendication 1 ou 2, caractérisé par le fait que, lors de l'étape b), l'on fait passer les gaz d'échappement refroidis dans un échangeur de chaleur d'abord dans un filtre à pores ou surface de passage suffisamment grands puis dans les dispositifs de séparation électrostatique.

4. Procédé selon la revendication 1 ou 3, caractérisé par le fait que l'on utilise un filtre en céramique ou une mousse de céramique avec un nombre de pores compris entre 4 et 40 par cm.

5. Dispositif pour la mise en oeuvre du procédé selon l'une des revendications précédentes comprenant deux échangeurs de chaleur à courants croisés (1, 2), deux vannes de déviation (16), des conduits (24, 24') pour les gaz d'échappement, caractérisé par le fait qu'il comprend en outre: soit deux dispositifs de séparation électrostatique dont les électrodes de charge (5) sont constituées par des fils métalliques fins et les électrodes collectrices (11) par les tubes des échangeurs de chaleur (1, 2) à courants croisés, soit deux filtres à pores ou surfaces de passage suffisamment grands de telle sorte que les composants condensés dans les pores ou les surfaces de passage ne forment pas un film liquide continu qui obstrue les pores ou les surfaces de passage.

6. Dispositif selon la revendication 5, comportant deux dispositifs de séparation électrostatique (5, 11), caractérisé par le fait qu'un filtre (7) en mousse de céramique est disposé entre lesdits deux dispositifs.
